# EUROPEAN PATENT APPLICATION

(11) **EP 4 475 300 A1**
(43) Date of publication of application: **11.12.2024**
(21) Application number: 23749799.5
(22) Date of filing: 01.02.2023
(51) Int. Cl.: H01M 50/193, H01M 10/052, H01M 10/0562, H01M 10/0585, H01M 50/131, H01M 50/178, H01M 50/184, H01M 50/197

(54) **TERMINAL RESIN FILM OF ALL SOLID STATE BATTERY AND ALL SOLID STATE BATTERY**

(30) Priority: 02.02.2022 JP 2022015008
(71) Applicant: Toppan Holdings Inc., Tokyo 110-0016 (JP)
(72) Inventor: MURAKI Takuya, Tokyo 110-0016 (JP)
(74) Representative: Hoffmann Eitle
(86) International application number: PCT/JP2023/003260
(87) International publication number: WO 2023/149483

(57) **Abstract**

In the present invention, a terminal resin film of a fully-solid-state battery is adhered by heat-sealing to an outer peripheral surface of a portion of a metal terminal that is electrically connected to a battery body constituting a fully-solid-state battery, wherein a moisture content is 2,700 ppm by mass or less. The terminal resin film may also be formed of a multilayer film having an insulating layer and a sealant layer provided on at least one surface of the insulating layer.

## Description

### [Technical Field]

The present invention relates to a terminal resin film of a fully-solid-state battery, and a fully-solid-state battery.

### [Background Art]

In recent years, the development of fully-solid-state batteries capable of having increased capacity has progressed rapidly. Unlike current lithium-ion batteries, fully-solid-state batteries have a solid electrolyte and therefore can be used at high temperatures, which could not be achieved before. Since this obviates the need for equipment for cooling the batteries, it is expected to improve space efficiency, reduce costs, and reduce power consumption.

Such fully-solid-state batteries are provided with a packaging bag that accommodates a battery body, such as a solid electrolyte and electrodes, and a metal terminal referred to as a tab that outputs current from the battery body, and a portion of the outer peripheral surface of the metal terminal is covered by a terminal resin film (also referred to as a "tab sealant").

As such a terminal resin film, for example, a film such as that described in PTL 1 below is conventionally known. In PTL 1, a terminal resin film composed of a resin composition having adhesion to a current output terminal is disclosed, in which the resin composition contains a thermoplastic resin with a melting point of 160°C or higher, and does not contain a thermoplastic resin with a melting point lower than 160°C.

### [Citation List]

### [Patent Literature]

PTL 1: WO 2020/004412

### [Summary of the Invention]

### [Technical Problem]

However, the terminal resin film of a fully-solid-state battery described in PTL 1 above has the following problem.

That is, when the terminal resin film described in PTL 1 above was heat sealed to a metal terminal, the occurrence of air bubbles was sometimes observed throughout the entire terminal resin film.

The present disclosure has been made in view of the above problem, and an object of the present disclosure is to provide a terminal resin film of a fully-solid-state battery that is capable of suppressing the occurrence of air bubbles when heat sealed to a metal terminal, and a fully-solid-state battery.

### [Solution to Problem]

The inventors have investigated the cause of the phenomenon in which air bubbles are observed throughout the terminal resin film as described above. As a result, it was considered that air bubbles were observed throughout the terminal resin film due to the fact that the terminal resin film is heat sealed to the metal terminal at high temperatures. That is, the inventors have considered the possibility that, when the terminal resin film is heat sealed to the metal terminal at high temperatures, the moisture in the terminal resin film evaporates, which causes the air bubbles that occur to suddenly expand and readily combine with other air bubbles, and remain after cooling. In addition, the inventors have considered the possibility that the phenomenon described above strongly depends on the moisture content in the terminal resin film. Therefore, as a result of further intensive research, the inventors have found that the problem described above can be solved by the following disclosure.

That is, the present disclosure is a terminal resin film of a fully-solid-state battery that is adhered by a heat seal to an outer peripheral surface of a portion of a metal terminal that is electrically connected to a battery body constituting a fully-solid-state battery, wherein a moisture content is 2,700 ppm by mass or less.

According to the terminal resin film described above, when the terminal resin film is heat sealed to an outer peripheral surface of a portion of a metal terminal, it is possible to suppress the occurrence of air bubbles in the terminal resin film. Consequently, when rough sections (sections with a large number of air bubbles) and dense sections (sections with a small number of air bubbles) occur in a terminal resin film, a reduction in the seal strength toward the metal terminal at the rough sections is suppressed. Therefore, even if the battery body containing the solid electrolyte expands due to use of the fully-solid-state battery under high temperature conditions, and a force is exerted that acts to open the packaging bag, it is possible for the terminal resin film to maintain the sealed state of the packaging bag. As a result, when the fully-solid-state battery accommodates a sulfide-based solid electrolyte inside the packaging bag as the solid electrolyte, even when a gas such as hydrogen sulfide is generated inside the packaging bag of the fully-solid-state battery due to a reaction between the moisture and the sulfide-based solid electrolyte, it is possible to suppress the leakage of such a gas. Furthermore, in the terminal resin film, because the generation of air bubbles that tend to become flow paths for moisture is suppressed, the entry of moisture into the terminal resin film from the outside of the exterior material is suppressed. As a result, when the fully-solid-state battery accommodates a sulfide-based solid electrolyte inside the packaging bag as the solid electrolyte, it is also possible to suppress generation of hydrogen sulfide due to reaction between the moisture and the sulfide-based solid electrolyte.

The moisture content of the terminal resin film described above may be 2,000 ppm by mass or less. In this case, when the terminal resin film is heat sealed to an outer peripheral surface of a portion of a metal terminal, it is possible to more sufficiently suppress the occurrence of air bubbles in the terminal resin film.

The moisture content of the terminal resin film described above may be 200 ppm by mass or more.

The terminal resin film described above is preferably formed of a multilayer film having an insulating layer and a sealant layer provided on at least one surface of the insulating layer.

In this case, it is possible to separate the functions of the terminal resin film. That is, the thickness of the terminal resin film is ensured by the insulating layer, and the insulation properties are ensured at the time of heat sealing. On the other hand, the sealant layer is capable of filling a gap between the terminal resin film and the metal terminal. Furthermore, even when the sealant layer becomes fluidized when heat sealing the terminal resin film to the metal terminal, and variation occurs in the insulation properties of the sealant layer, because the thickness of the terminal resin film is ensured by the insulating layer, stable insulation properties can be ensured.

In the multilayer film described above, the sealant layer may be provided on both sides of the insulating layer.

In the terminal resin film described above, of the multilayer film, the sealant layer is preferably an acid-modified polyolefin resin layer.

In this case, because the acid-modified polyolefin resin layer exhibits superior adhesion to metals, the adhesion between the sealant layer of the terminal resin film and the metal terminal can be further improved.

The terminal resin film is preferably formed of a polyolefin film containing a polyolefin-based resin, or a polyester film containing a polyester-based resin.

In this case, in the fully-solid-state battery, the sealing properties with respect to the metal terminal and the packaging bag are further enhanced. Furthermore, because polyolefin films and polyester films have heat resistance, the terminal resin film can further improve the heat resistance of the fully-solid-state battery.

The terminal resin film described above preferably has a melting point of 250°C or lower.

In this case, as a result of the terminal resin film having a melting point of 250°C or lower, the heat sealing temperature can be reduced. As a result, when the terminal resin film is heat sealed to the metal terminal, it is possible to further suppress the occurrence of air bubbles in the terminal resin film. Therefore, a reduction in seal strength and barrier performance of the terminal resin film can be suppressed. Consequently, the terminal resin film described above is capable of more sufficiently maintaining the sealing properties of the packaging bag of the fully-solid-state battery. Moreover, the terminal resin film is also capable of suppressing entry of moisture through the terminal resin film.

The terminal resin film described above preferably has a melting point of 150°C or higher.

In this case, because the terminal resin film has a melting point of 150°C or higher, even when the terminal resin film is used under high temperature conditions, it is possible to suppress a reduction in the seal strength of the terminal resin film with respect to the metal terminal. As a result, when the fully-solid-state battery accommodates a sulfide-based solid electrolyte inside the packaging bag as the solid electrolyte, even when a gas such as hydrogen sulfide is generated inside the packaging bag of the fully-solid-state battery due to a reaction between the moisture and the sulfide-based solid electrolyte, it is possible to further suppress the leakage of such a gas.

Furthermore, the present disclosure is a fully-solid-state battery comprising: a battery body containing a solid electrolyte; a metal terminal that is electrically connected to the battery body; an packaging bag that holds the metal terminal and accommodates the battery body; and a terminal resin film that is adhered by a heat seal to an outer peripheral surface of a portion of the metal terminal, wherein the terminal resin film is formed of the terminal resin film described above.

According to such a fully-solid-state battery, the terminal resin film is adhered by a heat seal to an outer peripheral surface of a portion of the metal terminal. Here, according to the terminal resin film described above, when the terminal resin film is heat sealed to the metal terminal, it is possible to suppress the occurrence of air bubbles in the terminal resin film. Consequently, according to the fully-solid-state battery of the present disclosure, it is possible to suppress the occurrence of rough sections and dense sections in the terminal resin film, and a reduction in the seal strength toward the metal terminal at the rough sections. Therefore, even if the battery body expands due to use of the fully-solid-state battery under high temperature conditions, and a force is generated that acts to try to open the packaging bag, the fully-solid-state battery is capable of maintaining the sealed state of the packaging bag with the terminal resin film. Furthermore, in the terminal resin film, because the generation of air bubbles that tend to become flow paths for moisture is suppressed, entry of moisture from the outside of the fully-solid-state battery is suppressed.

In the fully-solid-state battery described above, the solid electrolyte may be a sulfide-based solid electrolyte.

Note that, in the present disclosure, the "melting point" refers to a "peak melting temperature" calculated according to the method described in JIS K 7121-1987, and when two or more independent melting peaks appear, the lowest peak melting temperature is used.

Furthermore, in the present disclosure, when the terminal resin film is a multilayer film, the melting point is assumed to refer to the melting point of the layer having the lowest melting point among the layers constituting the multilayer film.

### [Advantageous Effects of the Invention]

According to the present disclosure, a terminal resin film of a fully-solid-state battery that is capable of suppressing the occurrence of air bubbles when heat sealed to a metal terminal, and a fully-solid-state battery are provided.

### [Brief Description of the Drawings]

Fig. 1 is a cross-sectional view schematically showing a terminal resin film of a fully-solid-state battery according to an embodiment of the present disclosure.
Fig. 2 is a perspective view showing an a fully-solid-state battery according to an embodiment of the present disclosure.
Fig. 3 is a partial cross-sectional view of the terminal resin film and the metal terminal shown in Fig. 2 taken along line A-A.
Fig. 4 is a cross-sectional view schematically showing an example of the packaging material shown in Fig. 1.
Fig. 5 is a cross-sectional view schematically showing a terminal resin film according to another embodiment of the present disclosure.
Fig. 6 is a plan view showing a structure for obtaining evaluation samples in the Examples and Comparative Examples.

### [Description of the Embodiments]

Hereinafter, preferred embodiments of the present disclosure will be described with reference to the drawings. Note that, in the drawings, the same or corresponding parts are denoted by the same reference signs, and duplicated descriptions are omitted. Furthermore, the dimensional ratios in the drawings are not limited to those shown in the drawings.

### [Terminal Resin Film of Fully-Solid-State Battery]

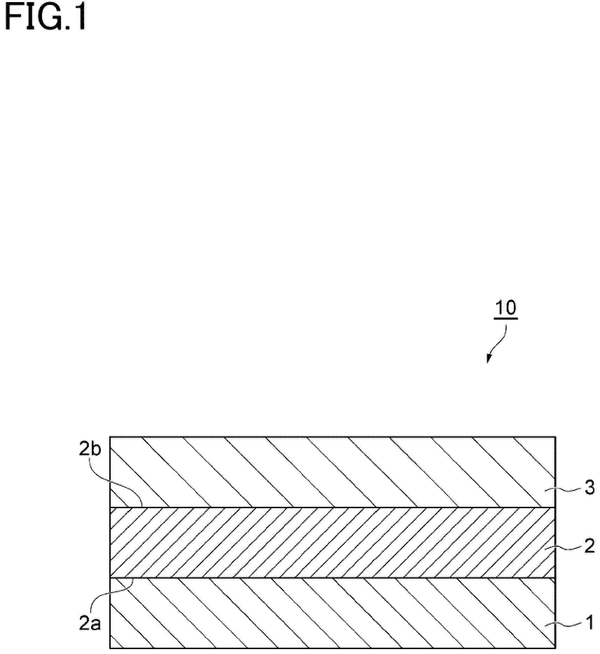

Fig. 1 is a cross-sectional view schematically showing a terminal resin film of a fully-solid-state battery according to an embodiment of the present disclosure. As shown in Fig. 1, the terminal resin film 10 of a fully-solid-state battery (hereinafter, also simply referred to as "terminal resin film") of the present embodiment includes a first sealant layer 1, an insulating layer 2, and a second sealant layer 3, in this order. That is, the terminal resin film 10 is a multilayer film. Here, the first sealant layer 1 is provided on a first surface 2a side of the insulating layer 2, and the second sealant layer 3 is provided on a second surface 2b side of the insulating layer 2. That is, the first sealant layer 1 and the second sealant layer 3 are provided on respective sides of the insulating layer 2. Furthermore, the moisture content of the terminal resin film 10 is 2,700 ppm by mass or less. Note that the terminal resin film 10 may include an adhesive layer that causes the first sealant layer 1 and the insulating layer 2 to adhere to each other. In addition, the terminal resin film 10 may include an adhesive layer that causes the second sealant layer 3 and the insulating layer 2 to adhere to each other.

In the terminal resin film 10, compared to a case where the moisture content of the terminal resin film 10 exceeds 2,700 ppm by mass, it is possible to further suppress the occurrence of air bubbles in the terminal resin film 10 when the terminal resin film 10 is heat sealed to the metal terminal. Furthermore, because the terminal resin film 10 is formed of a multilayer film including the insulating layer 2, and the first sealant layer 1 and the second sealant layer 3 which are provided on both sides of the insulating layer 2, it is possible to separate the functions of the terminal resin film 10. That is, the thickness of the terminal resin film 10 is ensured by the insulating layer 2, and the insulation properties are ensured at the time of heat sealing. Meanwhile, the first sealant layer 1 is capable of filling gaps between the terminal resin film 10 and the metal terminal. On the other hand, the second sealant layer 3 is capable of being heat sealed (thermally fused) to the packaging bag of the fully-solid-state battery. Furthermore, even when the first sealant layer 1 becomes fluidized when heat sealing the terminal resin film 10 to the metal terminal, and variation occurs in the insulation properties of the first sealant layer 1, because the thickness of the terminal resin film 10 is ensured by the insulating layer 2, stable insulation properties can be ensured.

Although it is sufficient for the moisture content of the terminal resin film 10 to be 2,700 ppm by mass or less, the moisture content may be 2,600 ppm by mass or less, 2,500 ppm by mass or less, or 2,200 ppm by mass or less. The moisture content of the terminal resin film 10 is preferably 2,000 ppm by mass or less, and more preferably 1,500 ppm by mass or less. The water content of the terminal resin film 10 may be 0 ppm by mass or more.

Furthermore, the moisture content of the terminal resin film 10 may be 200 ppm by mass or more, 300 ppm by mass or more, 400 ppm by mass or more, or 500 ppm by mass or more.

Note that, in the terminal resin film 10, it is sufficient for the overall moisture content to be 2,700 ppm by mass or less. Therefore, although the moisture content in each of the first sealant layer 1, the insulating layer 2, and the second sealant layer 3 may be 2,700 ppm by mass or less, even when the moisture content in some of the layers is 2,700 ppm by mass or less, and the moisture content in the remaining layers is higher than 2,700 ppm by mass, it is sufficient for the overall moisture content to be 2,700 ppm by mass or less.

Each of the layers constituting the terminal resin film 10 will be described in detail below.

### <First Sealant Layer>

In the present embodiment, the first sealant layer 1 is a layer that is adhered by heat-sealing (thermally fused) to an outer peripheral surface of a portion of the metal terminal 14.

As the first sealant layer 1, for example, a film containing a thermoplastic resin such as a polyolefin-based resin, a polyamide resin, a polyester-based resin, a polycarbonate resin, a polyphenylene ether resin, a polyacetal resin, a polystyrene resin, a polyvinyl chloride resin, or a polyvinyl acetate resin can be used. It is possible to control the seal suitability and the heat resistance by blending the various resins listed above to form a polymer alloy.

Among these, it is preferable to use a film containing a polyolefin-based resin (hereinafter, also referred to as "polyolefin film"), or a film containing a polyester-based resin (hereinafter, also referred to as "polyester film"). In this case, the sealing properties with respect to the metal terminal and the packaging bag are further enhanced. Furthermore, because polyolefin films and polyester films have heat resistance, the terminal resin film 10 can further improve the heat resistance of the fully-solid-state battery.

Examples of the polyolefin-based resin include polyolefin resins such as low-density, medium-density, and high-density polyethylene, ethylene-α-olefin copolymers, polypropylene, block or random copolymers containing propylene as a copolymerization component, and propylene-α-olefin copolymers. The polyolefin-based resin may be an acid-modified polyolefin resin formed by acid or glycidyl modification of a polyolefin resin.

Among these, the first sealant layer 1 is preferably an acid-modified polyolefin resin layer containing an acid-modified polyolefin resin. In this case, because the acid-modified polyolefin resin layer exhibits superior adhesion to metals, the adhesion between the terminal resin film 10 and the metal terminal can be further improved.

Examples of the polyester-based resin include polyethylene terephthalate (PET) resins, polybutylene terephthalate (PBT) resins, polyethylene naphthalate (PEN) resins, polybutylene naphthalate (PBN) resins, and copolymers thereof. These polyester-based resins may be used singly or in combination of two or more. Furthermore, it is possible to use a resin in which an arbitrary acid and glycol have been copolymerized.

In order to impart sealing properties, heat resistance, and other functionality, the first sealant layer 1 may include, as necessary, additives such as an antioxidant, a slip agent, a flame retardant, an anti-blocking agent, a light stabilizer, a dehydrating agent, a tackifier, a crystal nucleating agent, or a plasticizer.

The melting point of the first sealant layer 1 is not particularly limited, but is preferably 150°C or higher, more preferably 155°C or higher, and even more preferably 160°C or higher. As a result of the melting point of the first sealant layer 1 being 150°C or higher, even when the terminal resin film 10 is used under high temperature conditions, it is possible to suppress reduction in seal strength of the terminal resin film 10 to the metal terminal. As a result, when the fully-solid-state battery accommodates a sulfide-based solid electrolyte inside the packaging bag as the solid electrolyte, even when a gas such as hydrogen sulfide is generated inside the packaging bag of the fully-solid-state battery due to a reaction between the moisture and the sulfide-based solid electrolyte, it is possible to further suppress the leakage of such a gas.

The melting point of the first sealant layer 1 is preferably 250°C or lower, more preferably 240°C or lower, and even more preferably 230°C or lower. In this case, as a result of the melting point of the first sealant layer 1 being 250°C or lower, the heat sealing temperature can be reduced. As a result, when the terminal resin film 10 is heat sealed to the metal terminal, it is possible to further suppress the occurrence of air bubbles in the first sealant layer 1. Therefore, reduction in the seal strength and the barrier performance of the terminal resin film 10 with respect to the metal terminal can be suppressed. Consequently, the terminal resin film 10 is capable of more sufficiently maintaining the sealing properties of the packaging bag of the fully-solid-state battery. Moreover, the terminal resin film 10 is also capable of suppressing entry of moisture through the terminal resin film 10.

The thickness of the first sealant layer 1 is not particularly limited, but is preferably 10 to 200 µm, and more preferably 20 to 150 µm. As a result of the thickness of the first sealant layer 1 being 10 µm or more, it becomes easier for the gap between the metal terminal and the terminal resin film 10 is more easily filled by the resin constituting in the first sealant layer 1. Furthermore, as a result of the thickness of the first sealant layer 1 being 200 µm or less, because it is possible to reduce the amount of heat required to melt the first sealant layer 1, it is possible to perform sealing of the terminal resin film 10 to the metal terminal at a low temperature and in a short time, which enables the takt time to be shortened, and the productivity to be further improved.

The thickness of the first sealant layer 1 may be greater than the thickness of the second sealant layer 3, or may be less than or equal to the thickness of the second sealant layer 3, but is preferably greater than the thickness of the second sealant layer 3. Given the same thickness of the terminal resin film 10, when the thickness of the first sealant layer 1 is greater than the thickness of the second sealant layer 3, it is possible to make the amount of resin that fills the gap between the first sealant layer 1 and the metal terminal greater than that of the second sealant layer 3 when the terminal resin film 10 is heat sealed with respect to the metal terminal, and therefore, the gap can be filled more easily.

Furthermore, it is preferable that the thickness of the first sealant layer 1 and the second sealant layer 3 is the same, and that the first sealant layer 1 and the second sealant layer 3 include the same resin. In this case, it becomes possible to use the first sealant layer 1 as the second sealant layer 3, and the second sealant layer 3 as the first sealant layer 1, and because it is no longer necessary to distinguish between the first sealant layer 1 and the second sealant layer 3 when performing fusion processing of the terminal resin film 10 on the metal terminal, the fusion processing operation can be more efficiently performed. Here, the resin included in the first sealant layer 1 and the second sealant layer 3 is preferably an acid-modified polyolefin resin. In this case, even when the second sealant layer 3 is heat sealed on the metal terminal, the adhesion between the metal terminal and the terminal resin film can be further enhanced.

### <Insulating Layer 2>

The insulating layer 2 is a layer for suppressing layer thinning (seal thinning) of the terminal resin film 10 at the time of heat sealing, and for ensuring insulation properties between the metal terminal and the metal layer of the exterior material.

As the insulating layer 2, for example, a film containing a thermoplastic resin such as a polyolefin-based resin, a polyamide resin, a polyester-based resin, a polycarbonate resin, a polyphenylene ether resin, a polyacetal resin, a polystyrene resin, a polyvinyl chloride resin, or a polyvinyl acetate resin can be used. It is possible to control the seal suitability and the heat resistance by blending the various resins listed above to form a polymer alloy.

Among these, it is preferable to use a polyolefin film or a polyester film. In this case, because polyolefin films and polyester films have heat resistance, the terminal resin film 10 can further improve the heat resistance of the fully-solid-state battery.

Furthermore, in order to impart sealing properties, heat resistance, and other functionality, the insulating layer 2 may include, as necessary, additives such as an antioxidant, a slip agent, a flame retardant, an anti-blocking agent, a light stabilizer, a dehydrating agent, a tackifier, a crystal nucleating agent, a colorant, or a plasticizer.

The melting point of the insulating layer 2 is not particularly limited, but is preferably 150°C or higher, more preferably 155°C or higher, and even more preferably 160°C or higher. As a result of the melting point of the insulating layer 2 being 150°C or more, even when the terminal resin film 10 is used under high temperature conditions, it is possible to suppress reduction in the seal strength of the terminal resin film 10 to the metal terminal. As a result, when the fully-solid-state battery accommodates a sulfide-based solid electrolyte inside the packaging bag as the solid electrolyte, even when a gas such as hydrogen sulfide is generated inside the packaging bag of the fully-solid-state battery due to a reaction between the moisture and the sulfide-based solid electrolyte, it is possible to further suppress the leakage of such a gas.

The melting point of the insulating layer 2 is preferably 250°C or lower, more preferably 240°C or lower, and even more preferably 230°C or lower.

The melting point of the insulating layer 2 may be higher than the melting point of the resin included in the first sealant layer 1 and the second sealant layer 3, or may be less than or equal to the resin included in the first sealant layer 1 and the second sealant layer 3, but is preferably higher than the melting point of the resin included in the first sealant layer 1 and the second sealant layer. In this case, it is possible to suppress seal thinning (layer thinning) of the insulating layer 2 when the terminal resin film 10 is heat sealed on the exterior material that includes a barrier layer composed of a metal layer, and it becomes easier to ensure the insulation properties between the barrier layer of the exterior material and the metal terminal.

The thickness of the insulating layer 2 is not particularly limited, but is preferably 10 to 200 µm, and more preferably 20 to 150 µm. As a result of the thickness of the insulating layer 2 being 10 µm or more, sufficient insulation properties can be obtained. As a result of the thickness of the insulating layer 2 being 100 µm or less, the amount of water vapor that enters from the peripheral edge portion of the terminal resin film 10 can be reduced.

### <Second Sealant Layer>

In the present embodiment, the second sealant layer 3 is a layer that is heat sealed (thermally fused) to the packaging bag of the fully-solid-state battery.

As the second sealant layer 3, for example, a film containing a thermoplastic resin such as a polyolefin-based resin, a polyamide resin, a polyester-based resin, a polycarbonate resin, a polyphenylene ether resin, a polyacetal resin, a polystyrene resin, a polyvinyl chloride resin, or a polyvinyl acetate resin can be used. It is possible to control the seal suitability and the heat resistance by blending the various resins listed above to form a polymer alloy.

Among these, it is preferable to use a polyolefin film or a polyester film. In this case, the sealing properties with respect to the metal terminal and the packaging bag are further enhanced. Furthermore, because polyolefin films and polyester films have heat resistance, the terminal resin film 10 can further improve the heat resistance of the fully-solid-state battery.

Examples of the polyolefin-based resin include polyolefin resins such as low-density, medium-density, and high-density polyethylene, ethylene-α-olefin copolymers, polypropylene, block or random copolymers containing propylene as a copolymerization component, and propylene-α-olefin copolymers. The polyolefin-based resin may be an acid-modified polyolefin resin formed by acid or glycidyl modification of a polyolefin resin.

Examples of the polyester-based resin include polyethylene terephthalate (PET) resins, polybutylene terephthalate (PBT) resins, polyethylene naphthalate (PEN) resins, polybutylene naphthalate (PBN) resins, and copolymers thereof. These polyester-based resins may be used singly or in combination of two or more. Furthermore, it is possible to use a resin in which an arbitrary acid and glycol have been copolymerized.

When the first sealant layer 1 and the insulating layer 2 are constituted by a polyolefin film, it is preferable that the second sealant layer 3 is constituted by a polyolefin film. In this case, a laminated film consisting of the first sealant layer 1, the insulating layer 2, and the second sealant layer 3 can be formed by coextrusion, and the adhesion strength between the layers can be further increased. Furthermore, when the first sealant layer 1 and the insulating layer 2 are constituted by a polyester film, it is preferable that the second sealant layer 3 is constituted by a polyester film. In this case, good adhesion can be obtained when the first sealant layer 1, the insulating layer 2, and the second sealant layer 3 are adhered using a polyester-based adhesive having heat resistance.

In addition, in order to impart sealing properties, heat resistance, and other functionality, the second sealant layer 3 may include, as necessary, additives such as an antioxidant, a slip agent, a flame retardant, an anti-blocking agent, a light stabilizer, a dehydrating agent, a tackifier, a crystal nucleating agent, or a plasticizer.

The melting point of the second sealant layer 3 is not particularly limited, but is preferably 150°C or higher, more preferably 155°C or higher, and even more preferably 160°C or higher. As a result of the melting point of the second sealant layer 3 being 150°C or higher, even when the terminal resin film 10 is used under high temperature conditions, it is possible to suppress reduction in the seal strength of the terminal resin film 10 to the metal terminal. As a result, when the fully-solid-state battery accommodates a sulfide-based solid electrolyte inside the packaging bag as the solid electrolyte, even when a gas such as hydrogen sulfide is generated inside the packaging bag of the fully-solid-state battery due to a reaction between the moisture and the sulfide-based solid electrolyte, it is possible to further suppress the leakage of such a gas.

The melting point of the second sealant layer 3 is preferably 250°C or lower, more preferably 240°C or lower, and even more preferably 230°C or lower. In this case, as a result of the melting point of the second sealant layer 3 being 250°C or lower, the heat sealing temperature can be reduced. As a result, when the terminal resin film 10 is heat sealed to the packaging bag, it is possible to further suppress the occurrence of air bubbles in the second sealant layer 2. Therefore, reduction in the seal strength and the barrier performance of the terminal resin film 10 with respect to the metal terminal can be suppressed. Consequently, the terminal resin film 10 is capable of more sufficiently maintaining the sealing properties of the packaging bag of the fully-solid-state battery. Moreover, the terminal resin film 10 is also capable of suppressing entry of moisture through the terminal resin film 10.

The melting point of the second sealant layer 3 may be the same or different to the melting point of the first sealant layer 1, but is preferably the same.

The thickness of the second sealant layer 3 is not particularly limited, but is preferably 10 to 200 µm, and more preferably 20 to 150 µm. As a result of the thickness of the second sealant layer 3 being 10 µm or more, a sufficient seal strength can be obtained. As a result of the thickness of the second sealant layer 3 being 200 µm or less, because it is possible to reduce the amount of heat required to melt the second sealant layer 3, it is possible to perform sealing of the terminal resin film 10 to the packaging bag of the fully-solid-state battery at a low temperature and in a short time, which enables the takt time to be shortened, and the productivity to be further improved.

### <Hydrogen Sulfide Decomposition/Adsorption Material>

When the terminal resin film 10 is used in a fully-solid-state battery having a sulfide-based solid electrolyte, at least one of the layers among the layers constituting the terminal resin film 10 of the present embodiment may include a hydrogen sulfide decomposition/adsorption material that decomposes or adsorbs hydrogen sulfide. In this case, in the fully-solid-state battery, even when water and the sulfide-based solid electrolyte react to generate hydrogen sulfide, permeation of hydrogen sulfide through the terminal resin film 10 is suppressed. The hydrogen sulfide decomposition/adsorption material is included, for example, in one of the first sealant layer 1, the insulating layer 2, the second sealant layer 3, or an adhesive layer.

Examples of the hydrogen sulfide decomposition/adsorption material include zinc oxide, amorphous metal silicates (mainly containing copper and zinc metals), hydrates of zirconium and tanthanoid elements, tetravalent metal phosphates (particularly those containing copper has the metal), mixtures of zeolites and zinc ions, mixtures of zeolites with zinc oxide and copper(II) oxide, potassium permanganate, sodium permanganate, silver sulfate, silver acetate, aluminum oxide, iron hydroxide, isocyanate compounds, aluminum silicate, potassium aluminum sulfate, zeolites, activated carbons, amine compounds, and ionomers. Furthermore, the hydrogen sulfide decomposition/adsorption material preferably contains zinc oxide (ZnO) and/or zinc ions because such materials facilitate detoxifying hydrogen sulfide, are cost effective, and can be easily handled. The hydrogen sulfide decomposition/adsorption material may be used singly or in combination of two or more.

As the hydrogen sulfide decomposition/adsorption material, the following deodorizing agents may also be used that have a deodorizing effect with respect to hydrogen sulfide. Specific examples include "Daimushu PE-M 3000-Z" (polyethylene masterbatch product) manufactured by Dainichiseika Kogyo Co., Ltd., "Kesmon" manufactured by Toagosei Co., Ltd., "Shoe Cleanse" manufactured by Rasa Industries Co., Ltd., and "Dashlight ZU" and "Dashlight CZU" manufactured by Sinanen Zeomic Co., Ltd.

A metal soap such as zinc stearate may be added to the layer containing the hydrogen sulfide decomposition/adsorption material from the viewpoint of improving the dispersibility of the hydrogen sulfide decomposition/adsorption material. By using the hydrogen sulfide decomposition/adsorption material with a metal soap, it is possible to enhance the dispersibility of the hydrogen sulfide decomposition/adsorption material within the layer, and to make it more difficult for unevenness to occur in the effect of detoxifying hydrogen sulfide, while also suppressing a decrease in the functions (such as the adhesion strength or the seal strength) of the layer containing the hydrogen sulfide decomposition/adsorption material.

The hydrogen sulfide decomposition/adsorption material may be used by being prepared in advance as a masterbatch.

When the hydrogen sulfide decomposition/adsorption material is blended into at least one layer among the first sealant layer 1, the insulating layer 2, the second sealant layer 3, and the adhesive layer, a high-concentration blended product may be prepared in advance as a masterbatch, and the masterbatch may be blended into the resin of the at least one layer among the first sealant layer 1, the insulating layer 2, and the second sealant layer 3, and the adhesive layer. Note that the hydrogen sulfide decomposition/adsorption material is preferably blended into the insulating layer 2. In this case, because the hydrogen sulfide decomposition/adsorption material is not blended into the first sealant layer 1 and the second sealant layer 3, it is possible to further suppress a decrease in the strength between the first sealant layer 1 of the terminal resin film and the metal terminal, and it is also possible to further suppress a decrease in the strength between the second sealant layer 3 of the terminal resin film and the exterior material. The hydrogen sulfide decomposition/adsorption material may also be blended into the second sealant layer 3. In this case, because the hydrogen sulfide decomposition/adsorption material is not blended into the first sealant layer 1, it is also possible to further suppress a decrease in the strength between the first sealant layer 1 of the terminal resin film and the metal terminal.

In the case where the hydrogen sulfide decomposition/adsorption material is blended into the adhesive layer described above, blending may be performed by direct blending into a coating liquid if the adhesive layer is applied, or by preparation of a masterbatch in a similar manner to the first sealant layer described above if the adhesive layer is formed by extrusion or the like. Note that, as the resin used when a masterbatch is prepared, for example, a thermoplastic resin such as a polyolefin-based resin, a polyamide resin, a polyester-based resin, a polycarbonate resin, a polyphenylene ether resin, a polyacetal resin, a polystyrene resin, a polyvinyl chloride resin, or a polyvinyl acetate resin can be used.

The content of the hydrogen sulfide decomposition/adsorption material in the layer containing the hydrogen sulfide decomposition/adsorption material is, based on the total amount of the layer, 0.01% by mass or more and 30% by mass or less, or 0.05% by mass or more and 20% by mass or less, or 0.1% by mass or more and 15% by mass or less. As a result of the content of the hydrogen sulfide decomposition/adsorption material being greater than or equal to the lower limit values above, it is easy to sufficiently obtain the effect of rendering the hydrogen sulfide harmless, and by being less than or equal to the upper limit values above, it is possible to suppress a decrease in the functions (such as the adhesion strength or the seal strength) of the layer containing the hydrogen sulfide decomposition/adsorption material.

### [Manufacturing Method of Terminal Resin Film]

Next, a manufacturing method of the terminal resin film 10 will be described. However, the manufacturing method of the terminal resin film 10 is not limited to the manufacturing method described below.

The terminal resin film 10 can be obtained, for example, by coextrusion of the first sealant layer 1, the insulating layer 2, and the second sealant layer 3.

The terminal resin film 10 can also be obtained by preparing the first sealant layer 1, the insulating layer 2, and the second sealant layer 3 in advance, and then stacking and heat laminating the layers.

The temperature during heat lamination is a temperature that is higher than the melting point of the first sealant layer 1 and the melting point of the second sealant layer 3.

When the terminal resin film 10 includes the first sealant layer 1, the adhesive layer, the insulating layer 2, and the second sealant layer 3, it is possible to produce a two-layered film composed of the insulating layer 2 and the second sealant layer 3 in advance, and then laminate the two-layered film and the first sealant layer 1 with an adhesive using a dry lamination method that uses an adhesive.

### [Fusion Method of Terminal Resin Film]

The fusion processing that fuses and adheres the terminal resin film 10 shown in Fig. 1 and the packaging bag will be described.

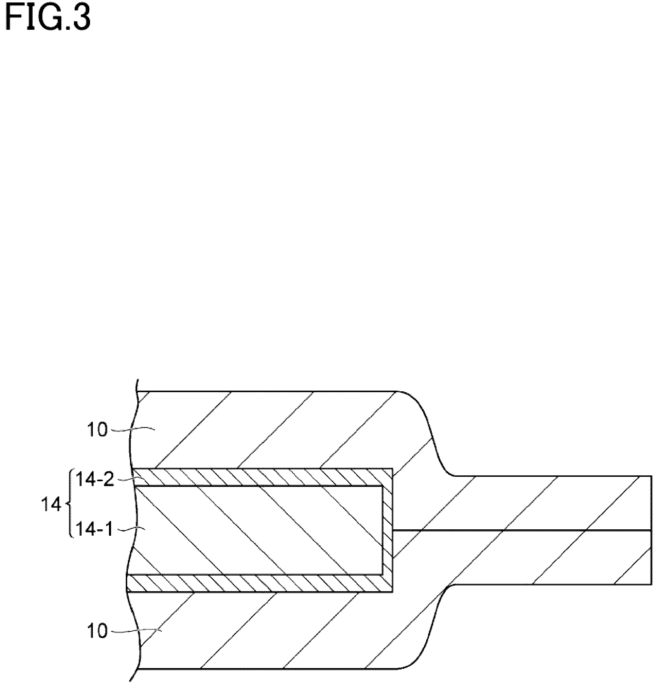

First, fusion processing that fuses and adheres the terminal resin film 10 and the metal terminal 14 is performed. At this time, the first sealant layer 1 of the terminal resin film 10 shown in Fig. 1 is oriented toward the metal terminal 14 side, and the terminal resin film 10 and the metal terminal 14 are thermally fused by simultaneously melting the first sealant layer 1 by heating, and adhering the first sealant layer 1 and the metal terminal 14 by pressurization (see Fig. 3).

In the fusion processing, from the viewpoint of obtaining sufficient adhesion and sealing properties between the terminal resin film 10 and the metal terminal 14, it is preferable that the heating is performed at a temperature that is at least 20°C higher than the melting point of the first sealant layer 1.

The heating temperature of terminal resin film 10 may be, for example, 155 to 285°C. Furthermore, the thermal fusion time can be determined in consideration of the adhesion to the metal terminal 14 and the productivity. The thermal fusion time can be appropriately set, for example, in a range of 1 to 60 seconds.

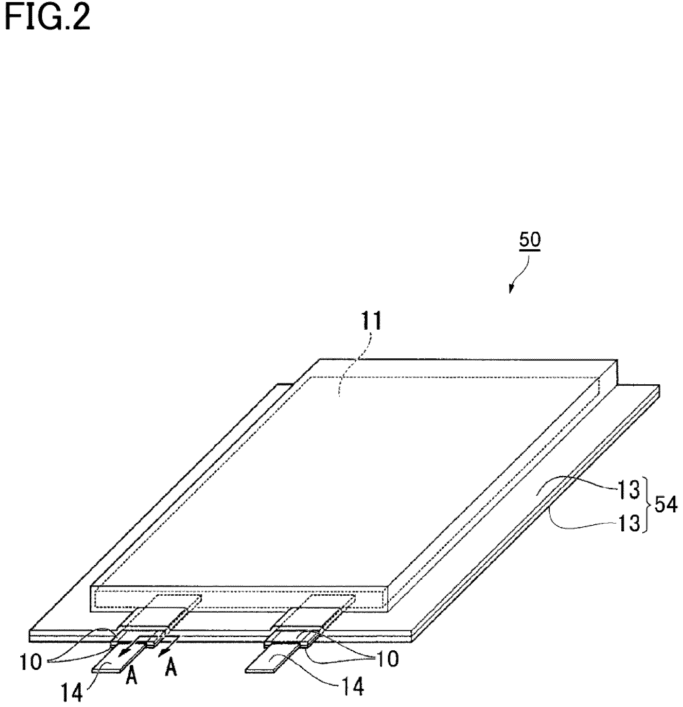

Then, fusion processing that fuses and adheres the terminal resin film 10 and the exterior material 13 is performed (see Fig. 2). Specifically, the terminal resin film 10 and the exterior material are thermally fused by simultaneously melting the second sealant layer 3 by heating, and adhering the second sealant layer 3 and the exterior material by pressurization.

In the fusion processing, the second sealant layer 3 of the terminal resin film 10 and the sealant layer of the exterior material 13 are heated and melted. At this time, although the heating temperature is a temperature that causes the second sealant layer 3 of the terminal resin film 10 and the sealant layer of the exterior material 13 to melt, from the viewpoint of obtaining sufficient adhesion and sealing properties of the second sealant layer 3 of the terminal resin film 10 and the sealant layer of the exterior material 13, the temperature is preferably at least 20°C higher than the higher melting point among those of the second sealant layer 3 of the terminal resin film 10 and the sealant layer of the exterior material 13.

The heating temperature of terminal resin film 10 may be, for example, 155 to 285°C. The thermal fusion time can be determined in consideration of the adhesion to the exterior material 13 and the productivity. The thermal fusion time can be appropriately set, for example, in a range of 1 to 60 seconds.

### [Fully-solid-state Battery]

Fig. 2 is a perspective view showing an embodiment of a fully-solid-state battery prepared using the terminal resin film described above. As shown in Fig. 2, the fully-solid-state battery 50 includes a battery body 11 having a sulfide-based electrolyte as a solid electrolyte, two metal terminals (current output terminals) 14 for externally outputting current from the battery body 11, the terminal resin film 10, and a packaging bag 54 that accommodates the battery body 11 in an air-tight state. The packaging bag 54 is used as a container that accommodates the battery body 11. The terminal resin film 10 is adhered to an outer peripheral surface of a portion of the metal terminals 14, and the metal terminals 14 are held by the packaging bag 54 via the terminal resin film 10. In the terminal resin film 10, the first sealant layer 1 is adhered to the metal terminals 14, and the second sealant layer 3 is adhered to the packaging bag 54.

According to the fully-solid-state battery 50, the terminal resin film 10 is adhered to the metal terminals 14 by heat-sealing. Here, according to the terminal resin film 10, when the terminal resin film 10 is heat sealed to the metal terminals 14, it is possible to suppress the occurrence of air bubbles in the terminal resin film 10. Consequently, according to the fully-solid-state battery 50, it is possible to suppress the occurrence of rough sections and dense sections in the terminal resin film 10, and a reduction in the seal strength to the metal terminal in the rough sections. Therefore, even if the battery body 11 expands due to use of the fully-solid-state battery 50 under high temperature conditions, and a force is generated that acts to try to open the packaging bag 54, the fully-solid-state battery 50 is capable of maintaining the sealed state of the packaging bag 54 with the terminal resin film 10. As a result, even if hydrogen sulfide is generated inside the packaging bag 54, leakage of the hydrogen sulfide from the packaging bag 54 can be suppressed. Furthermore, in the first sealant layer 1, because the generation of air bubbles that tend to become flow paths for moisture is suppressed, entry of moisture from the outside of the terminal resin film 10 is suppressed. As a result, generation of hydrogen sulfide due to reaction between the moisture and the sulfide-based electrolyte can be suppressed.

Hereinafter, the battery body 11, the metal terminals 14, and the packaging bag 54 will be described in detail.

### <Battery Body>

The battery body 11 has at least one power generation element consisting of a positive electrode, a solid electrolyte, and a negative electrode. The solid electrolyte is not limited to a sulfide-based solid electrolyte, and may also be an oxide-based solid electrolyte or the like.

### <Metal Terminals>

As shown in Figs. 2 and 3, the pair of metal terminals 14 include a metal terminal body 14-1 and an anticorrosion layer 14-2. Of the pair of metal terminal bodies 14-1, one metal terminal body 14-1 is electrically connected to the positive electrode of the battery body 11, and the other metal terminal body 14-1 is electrically connected to the negative electrode of the battery body 11. The pair of metal terminal bodies 14-1 extend in a direction away from the battery body 11, while being partially exposed from the exterior material 13. The pair of metal terminal bodies 14-1 may each have a plate-like shape, for example.

A metal can be used as the material of the metal terminal bodies 14-1. The metal can be determined in consideration of the structure of the battery body 11, the materials of the constituent elements of the battery body 11, and the like.

When the fully-solid-state battery 50 is a lithium-ion secondary battery, it is possible to use aluminum as a positive electrode current collector, and it is possible to use copper as a negative electrode current collector. When the fully-solid-state battery 50 is a lithium ion secondary battery, the material of the metal terminal body 14-1 that is connected to the positive electrode of the battery body 11 is preferably aluminum. Furthermore, the material of the metal terminal body 14-1 that is connected to the positive electrode of the battery body 11 may be an aluminum material with a purity of 97% or more, such as 1N30. In addition, when the metal terminal body 14-1 is bent, an O temper that has been tempered by sufficient annealing may be used for the purpose of adding flexibility. The material of the metal terminal body 14-1 that is connected to the negative terminal of the battery body 11 may be constituted by, for example, copper whose surface is formed of a nickel-plated layer, or nickel.

The thickness of the metal terminal bodies 14-1 can be determined according to the size and capacity of the fully-solid-state battery 50. When the fully-solid-state battery 50 has a small size, the thickness of the metal terminal bodies 14-1 may be 50 µm or more. When the fully-solid-state battery has a large size for electrical storage or on-board applications, the thickness of the metal terminal bodies 14-1 can be appropriately set within a range of 100 to 1,000 µm.

The anticorrosion layer 14-2 is disposed so as to cover the surface of the metal terminal bodies 14-1. In the fully-solid-state battery 50, the anticorrosion layer 14-2 is a layer for suppressing corrosion of the metal terminal bodies 14-1 from corrosive components such as hydrogen sulfide.

### <Packaging Bag >

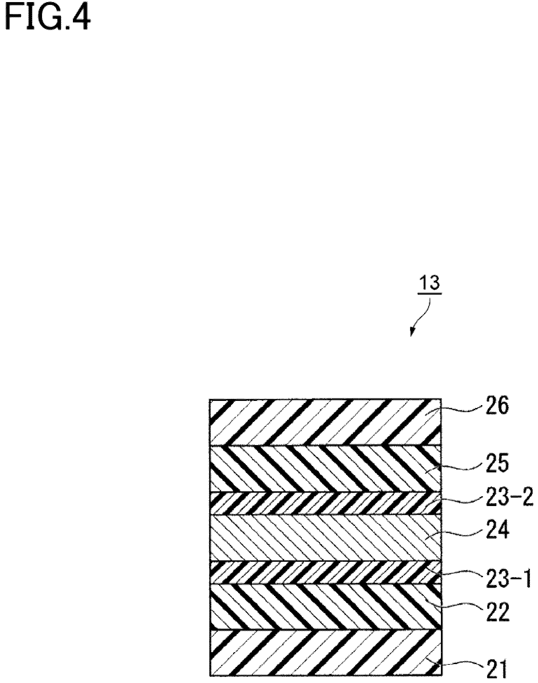

As shown in Fig. 2, the packaging bag 54 is obtained by overlapping two exterior materials 13, and heat sealing the overlapping peripheral edge portions to each other. The packaging bag 54 can also be obtained by folding an exterior material 13 in half, and heat sealing the overlapping peripheral edge portions to each other. The exterior material 13 includes, in order from the battery body 11 side, a sealant layer 21, a first adhesive layer 22, an anti-corrosion treatment layer 23-1, a barrier layer 24, an anti-corrosion treatment layer 23-2, a second adhesive layer 25, and a substrate layer 26 (see Fig. 4).

The sealant layer 21 is a layer that imparts sealing properties to the exterior material 13 by heat sealing, and is a layer that is heat sealed (thermally fused) by being disposed on the inside at the time of assembly of the fully-solid-state battery 50. As the base material of the sealant layer 21, for example, polyolefin resins, and acid-modified polyolefin resins obtained by graft-modifying a polyolefin resin with maleic anhydride or the like can be used. As the polyolefin resin mentioned above, low-density, medium-density and high-density polyethylenes, ethylene-α-olefin copolymers, homo-, block- or random-polypropylenes, and propylene-α-olefin copolymers can be used. Among these, the polyolefin resin mentioned above preferably contains polypropylene. These polyolefin resins can be used singly or in combination of two or more.

Depending on the required functions, the sealant layer 21 may be a single layer film or a multilayer film in which a plurality of layers have been laminated. Specifically, a multilayer film interposed by a resin, such as ethylene-cyclic olefin copolymer or polymethyl pentene, may be used to impart moisture resistance. The sealant layer 21 may include, for example, various additives (such as a flame retardant, a slip agent, an anti-blocking agent, an antioxidant, a light stabilizer, or a tackifier).

The thickness of the sealant layer 21 is preferably 10 to 150 µm, and more preferably 30 to 80 µm. As a result of the thickness of the sealant layer 21 being 10 µm or more, the exterior material 13 has a sufficient adhesion with the exterior material 13 or the terminal resin film 10. Furthermore, as a result the thickness of the sealant layer 21 being 150 µm or less, the cost of the exterior material 13 can be suppressed.

As the first adhesive layer 22, a known adhesive can be appropriately selected and used, such as a dry lamination adhesive or an acid-modified thermally-fusible resin.

As shown in Fig. 4, it is preferable in terms of performance for the anti-corrosion treatment layers 23-1 and 23-2 to be formed on both surfaces of the barrier layer 24, but from the viewpoint of suppressing cost, the anti-corrosion treatment layer 23-1 may be provided on only the surface of the barrier layer 24 on the first adhesive layer 22 side.

The barrier layer 24 may be a metal layer having electrical conductivity. Examples of the material of the barrier layer 24 include aluminum and stainless steel, and from the viewpoint of the cost, mass (density), and the like, aluminum is preferable.

As the second adhesive layer 25, it is possible to use a polyurethane-based adhesive having a polyester polyol, a polyether polyol, an acrylic polyol, or the like, as the base resin.

The substrate layer 26 may be a single layer film or a multilayer film formed of nylon, polyethylene terephthalate (PET), or the like. Like the sealant layer 21, the substrate layer 26 may include, for example, various additives (such as a flame retardant, a slip agent, an anti-blocking agent, an antioxidant, a light stabilizer, or a tackifier).

Furthermore, the exterior material 13 may further include a protective layer (not illustrated) that protects the substrate layer 26 on the surface of the substrate layer 26 on the opposite side to the sealant layer 21.

In addition, in the exterior material 13, an adhesive resin layer may be used instead of the first adhesive layer 22.

At least one layer among the layers constituting the exterior material 13 may, like the terminal resin film 10, include a hydrogen sulfide decomposition/adsorption material. In this case, in the fully-solid-state battery 50, even when water and the sulfide-based solid electrolyte react to generate hydrogen sulfide, permeation of hydrogen sulfide through the exterior material 13 is suppressed. The hydrogen sulfide decomposition/adsorption material is included in, for example, the first adhesive layer 22, the second adhesive layer 25, the sealant layer 21, or at least one layer among these layers. Specifically, the hydrogen sulfide decomposition/adsorption material is preferably included in the sealant layer 21. In this case, the permeation of hydrogen sulfide through the exterior material 13 is effectively suppressed.

Although a preferred embodiment of the present disclosure has been described above, the present disclosure is not limited to the embodiment described above.

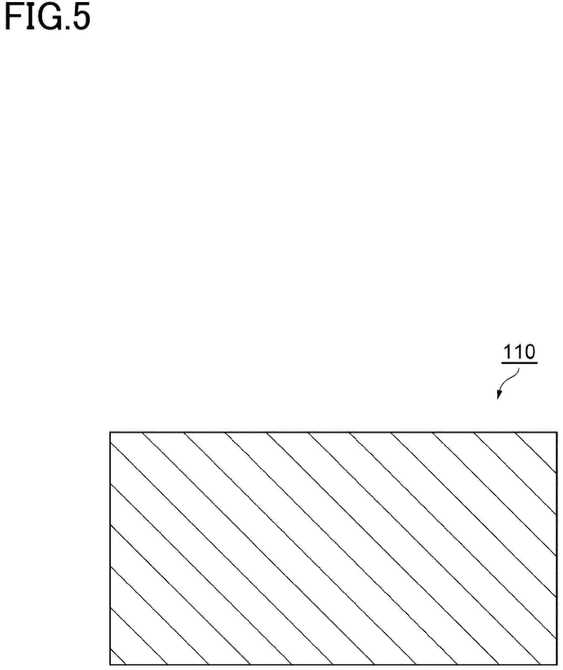

For example, although the terminal resin film 10 includes the first sealant layer 1, the insulating layer 2, and the second sealant layer 3, when the packaging bag 54 does not include a metal layer, the terminal resin film 10 does not have to include the insulating layer 2. Furthermore, the terminal resin film may be configured by a single layer film as in the terminal resin film 110 shown in Fig. 5. In this case, the terminal resin film 110 includes a moisture content of 2,700 ppm by mass or less. The terminal resin film 110 may be configured by any one of the first sealant layer 1, the insulating layer 2, or the second sealant layer 3.

### [Examples]

Hereinafter, the present disclosure will be described in more detail by way of Examples, but the present disclosure is not limited to the following Examples.

### (Example 1)

A film composed of acid-modified polypropylene (thickness: 25 µm, melting point: 140°C), a film composed of polypropylene (thickness: 50 µm, melting point: 164°C), and a film composed of acid-modified polypropylene (thickness: 25 µm, melting point: 140°C) were coextruded to obtain a polyolefin film 1 (PO film 1) with a thickness of 100 µm. The moisture content of the obtained PO film 1 was 358 ppm by mass.

### (Example 2)

Other than changing the PO film 1 to a polyolefin film 2 (PO film 2) composed of a polypropylene-polyethylene random copolymer (manufactured by Futamura Chemical Co., Ltd., product name: FHK2, melting point: 135°C), and changing the thickness from 100 µm to 40 µm, the terminal resin film was obtained in the same manner as in Example 1. The moisture content of the obtained terminal resin film was 516 ppm by mass.

### (Example 3)

Other than changing the PO film 1 to a polyester film (polyester film 1) composed of polyethylene terephthalate (manufactured by UNITIKA Co., Ltd., product name: EMBLET, melting point: 257°C), and changing the thickness from 100 µm to 25 µm, the terminal resin film was obtained in the same manner as in Example 1. The moisture content of the obtained terminal resin film was 2,682 ppm by mass.

### (Example 4)

Other than changing the PO film 1 to a polyester film (polyester film 2) composed of polyethylene naphthalate (manufactured by Toyobo Co., Ltd., product name: TEONEX, melting point: 265°C), and changing the thickness from 100 µm to 25 µm, the terminal resin film was obtained in the same manner as in Example 1. The moisture content of the obtained terminal resin film was 2,637 ppm by mass.

### (Example 5)

Other than changing the PO film 1 to a polyester film (polyester film 3) composed of a copolymer of a plurality of types of polyethylene terephthalate (melting point: 210°C), and changing the thickness from 100 µm to 25 µm, the terminal resin film was obtained in the same manner as in Example 1. The moisture content of the obtained terminal resin film was 1,648 ppm by mass.

### (Example 6)

Other than changing the PO film 1 to a polyolefin film 3 (PO film 3) composed of a laminated body formed by coextrusion of a film composed of acid-modified polypropylene (thickness: 25 µm, melting point: 165°C), a film composed of polypropylene (thickness: 50 µm, melting point: 165°C), and a film composed of acid-modified polypropylene (thickness: 25 µm, melting point: 165°C), the terminal resin film was obtained in the same manner as in Example 1. The moisture content of the obtained terminal resin film was 546 ppm by mass.

### (Comparative Example 1)

Other than changing the PO film 1 to a polyamide film (PA film) composed of nylon 6 (manufactured by TOYOBO Co., Ltd., product name: HARDEN N1102, melting point: 225°C), and changing the thickness from 100 µm to 25 µm, the terminal resin film was obtained in the same manner as in Example 1. The moisture content of the obtained terminal resin film was 23,729 ppm by mass.

Note that the moisture content was measured as follows.

That is, a terminal resin film cut into 10 cm squares was left for two days in an environment of 23°C/50% RH, and then heated with a heating moisture vaporizer (manufactured by HIRANUMA Co., Ltd., product name: EV-2000) set at 300°C, and the amount of moisture generated was measured using a trace moisture measurement device (Karl Fischer: "AQ-2100" manufactured by HIRANUMA Co., Ltd.). At this time, dry N₂ gas was used as the carrier gas. Then, using the value of the amount of moisture measured as described above, the moisture content was calculated based on the equation below. Moisture content (ppm by mass) = measured amount of moisture (g)/mass of terminal resin film (g)

### <Evaluation of Terminal Resin Film>

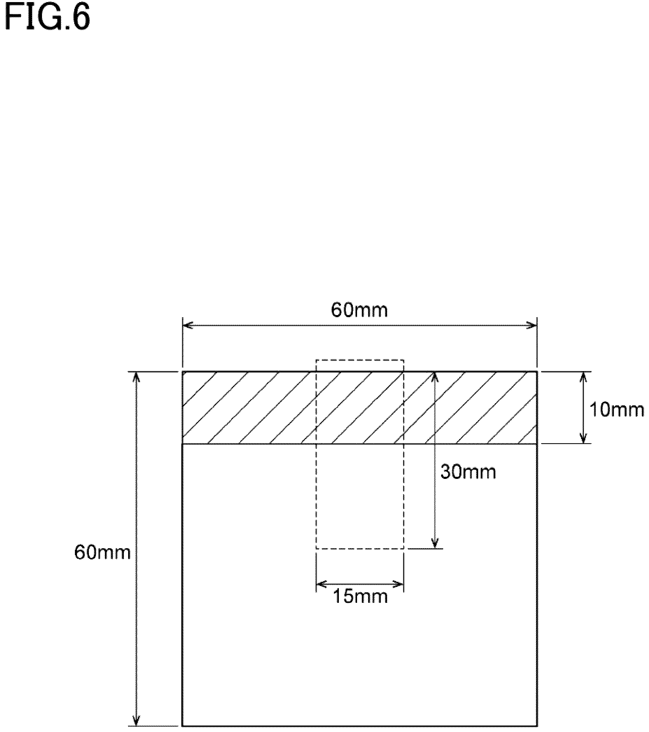

A terminal resin film was cut out to a size of 120 mm × 60 mm and folded in half, both end portions in the longitudinal direction of the terminal resin film were overlapped, and both of the end portions were heat sealed for 10 seconds at a temperature 20°C higher than the melting point of the terminal resin film while applying a pressure of 0.6 MPa, and a structure was prepared by forming a heat seal portion (shaded portion in Fig. 6) having a width of 10 mm. Then, the structure was stored for 12 hours at room temperature. Next, a central portion of the heat seal portion in the longitudinal direction having a width of 15 mm × 30 mm was cut out from the structure (see the dashed line portion in Fig. 6) to prepare an evaluation sample. Then, the evaluation sample was separated into two separated pieces at the fused portion. Next, the fused portion of the separated pieces was visually observed, and the state of generation of air bubbles in the terminal resin film was evaluated based on the criteria below. The results are shown in Table 1. Note that when the terminal resin film was a multilayer film, the "melting point of the terminal resin film" was the melting point of the sealant layer, which was the layer having the lowest melting point among the layers constituting the multilayer film, and was disposed on the outermost side.

### (Evaluation Criteria)

Excellent: No air bubble generation observed
Good: Local air bubble generation observed
Poor: Generation of air bubbles observed throughout

**[Table 1]**

| | Terminal resin film | | | | Evaluation |
|---|---|---|---|---|---|
| | Type | Thickness (µm) | Melting point (°C) | Moisture content (ppm by mass) | Generation state of air bubbles |
| Example 1 | PO film 1 | 100 | 140 / 164 / 140 | 358 | Excellent |
| Example 2 | PO film 2 | 40 | 135 | 516 | Excellent |
| Example 3 | Polyester film 1 | 25 | 257 | 2,682 | Good |
| Example 4 | Polyester film 2 | 25 | 265 | 2,637 | Good |
| Example 5 | Polyester film 3 | 25 | 210 | 1,648 | Excellent |
| Example 6 | PO film 3 | 100 | 165/165/165 | 546 | Excellent |
| Comparative Example 1 | PA film | 25 | 225 | 23,729 | Poor |

From the results shown in Table 1, it was understood that in the terminal resin films of Examples 1 to 6, which had a moisture content of 2,700 ppm by mass or less, the occurrence of air bubbles was suppressed compared to the terminal resin film of Comparative Example 1, which had a moisture content exceeding 2,700 ppm by mass.

Therefore, it was confirmed that, for the terminal resin film of a fully-solid-state battery of the present disclosure, the occurrence of air can be suppressed when heat sealed to a metal terminal.

### [Reference Signs List]

1 ... First sealant layer (sealant layer),
2 ... Insulating layer,
3 ... Second sealant layer (sealant layer),
10, 110 ... Terminal resin film,
1 1 ... Battery body,
14 ... Metal terminal,
50 ... Fully-Solid-state battery.

## Claims

1. A terminal resin film of a fully-solid-state battery that is adhered by a heat seal to an outer peripheral surface of a portion of a metal terminal that is electrically connected to a battery body constituting the fully-solid-state battery, wherein
a moisture content is 2,700 ppm by mass or less.

2. The terminal resin film of a fully-solid-state battery according to claim 1, wherein the moisture content is 2,000 ppm by mass or less.

3. The terminal resin film of a fully-solid-state battery according to claim 1 or 2, wherein the moisture content is 200 ppm by mass or more.

4. The terminal resin film of a fully-solid-state battery according to any one of claims 1 to 3, comprising
a multilayer film having an insulating layer, and a sealant layer provided on at least one surface of the insulating layer.

5. The terminal resin film of a fully-solid-state battery according to claim 4, wherein
in the multilayer film, the sealant layer is provided on both surfaces of the insulating layer.

6. The terminal resin film of a fully-solid-state battery according to claim 4 or 5, wherein of the multilayer film, the sealant layer is an acid-modified polyolefin resin layer.

7. The terminal resin film of a fully-solid-state battery according to any one of claims 1 to 3, which is formed of a polyolefin film containing a polyolefin-based resin, or a polyester film containing a polyester-based resin.

8. The terminal resin film of a fully-solid-state battery according to any one of claims 1 to 7, wherein
a melting point is 250°C or lower.

9. The terminal resin film of a fully-solid-state battery according to any one of claims 1 to 8, wherein
a melting point is 150°C or higher.

10. A fully-solid-state battery comprising:
a battery body containing a solid electrolyte;
a metal terminal that is electrically connected to the battery body;
a packaging bag that holds the metal terminal and accommodates the battery body; and
a terminal resin film that is adhered by a heat seal to an outer peripheral surface of a portion of the metal terminal, wherein
the terminal resin film is formed of the terminal resin film according to any one of claims 1 to 9.

11. The fully-solid-state battery according to claim 10, wherein
the solid electrolyte is a sulfide-based solid electrolyte.
